# EUROPÄISCHE PATENTSCHRIFT

(11) **EP 0 784 455 B1**
(45) Veröffentlichungstag und Bekanntmachung des Hinweises auf die Patenterteilung: **25.11.1998**
(21) Anmeldenummer: 95935401.0
(22) Anmeldetag: 28.09.1995
(51) Int. Cl.: A61C 8/00

(54) **BEFESTIGUNGSVORRICHTUNG FÜR ZAHNIMPLANTATE**
SECURING DEVICE FOR TOOTH IMPLANTS
DISPOSITIF PERMETTANT DE FIXER DES IMPLANTS DENTAIRES

(30) Priorität: 06.10.1994 DE 4435694; 14.09.1995 DE 19534169
(43) Veröffentlichungstag der Anmeldung: 23.07.1997
(73) Patentinhaber: METAUX PRECIEUX SA METALOR, CH-2009 Neuchâtel (CH)
(72) Erfinder: WOLF, Manfred, D-70771 Leinfelden-Echterdingen (DE)
(74) Vertreter: Becker, Maria, Dipl.-Phys.
(86) Internationale Anmeldenummer: EP9503839
(87) Internationale Veröffentlichungsnummer: WO9610964

(56) Entgegenhaltungen:
- CA-A- 1 313 597
- DE-U- 8 905 497

## Beschreibung

Die Erfindung betrifft eine Befestigungsvorrichtung für Zahnimplantate mit den Merkmalen des Oberbegriffs von Patentanspruch 1.

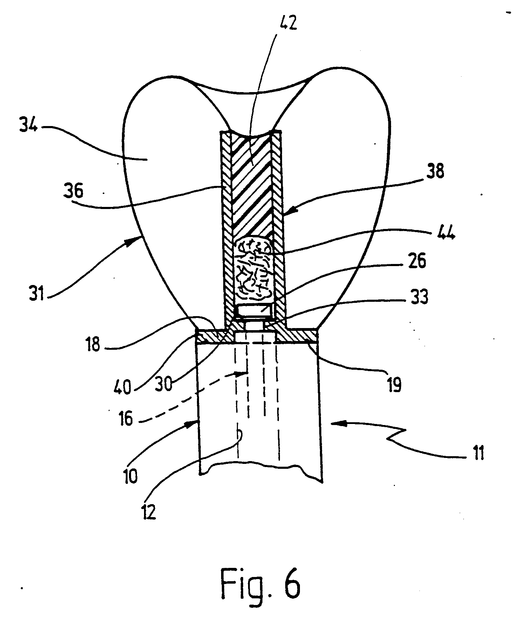

Eine Befestigungsvorrichtung dieser Art ist aus CA-1,313,597 (Fig. 6) bekannt.

Bei dieser Konstruktion ist die Schraubverbindung zum Festspannen eines Kronen- oder Brückenaufbaus auf dem Implantatkörper zweiteilig ausgebildet. Der eine Teil bildet eine mit eine Gewindeschaft in eine zentrale Gewindebohrung des Implantatkörpers einschraubbare Verbindungsschraube, auf deren verbiegtem, gewindefreien, zylindrischen Schaftteil ein hülsenartiger Befestigungssockel aufsteckbar ist. Mit einem sich nach unten konisch verjüngenden Umfangsflächenteil stützt sich der zylindrische Schaftteil auf einer hierzu komplementären Innenringschulter des Befestigungssockels ab, wodurch dieser sowie der Implantatkörper axial fest miteinander verspannbar sind

Zwischen beiden Teilen ist eine Ringscheibendichtung eingespannt, in deren untere Ringstirnfläche sich dabei eine an die obere Stirnringfläche des Implantatkörpers konzentrisch angeformte, ringförmige Dichtkante formschlüssig eingräbt.

Eine weitere Dichtung ist in Form eines Dichtringes vorgesehen, der in eine Umfangsnut des zylindrischen Schaftteils der Verbindungsschraube eingelegt ist und sich am Innenumfang des hülsenartigen Befestigungssockels abstützt.

Der andere Teil der Schraubverbindung bildet eine Verankerungsschraube, die mit ihre Gewindeschaft in eine zentrale Gewindebohrung des zylindrischen Schaftteils der Verbindungsschraube einschraubbar ist. Die Verankerungsschraube dient dazu, ein Aufnahmeteil für einen Zahnersatz in Form eines Kronen- oder Brückenaufbaus, das zugleich ein oberes Verschlussteil des hülsenartigen Befestigungssockels bildet, mit letzterem axial zu verspannen.

Die Verankerungsschraube weist hierzu einen sich nach unten konisch verjüngenden Schraubenkopf auf, der sich an einem sich in gleicher Weise nach unten konisch verjüngenden Innenumfangsteil einer zentralen, sich anschliessend zylindrisch fortsetzenden Bohrung des Aufnahmeteils abstützt.

Der Aufnahmeteil sitzt seinerseits fest in einem Kronen- oder Brückenaufbau, der bei Festziehen der Verankerungsschraube auf den Befestigungssockel aufspannbar ist.

Durch die Anordnung der erläuterten Dichtmittel (Ringscheibendichtung; Dichtring sowie Dichtkante) soll hierbei ein Einsickern von ggf. zu Infektionen führender Mundflüssigkeit in den Implantatkörper vermieden werden.

Die beschriebene Art der Abdichtung ist bedingt durch den vielteiligen und dementsprechend teuren Aufbau dieser Befestigungsvorrichtung.

Der Erfindung liegt die Aufgabe zugrunde, eine Befestigungsvorrichtung der im Oberbegriff des Patentanspruches 1 erläuterten Art anzugeben, die, ohne zusätzliche, spezielle Dichtelemente zu benötigen, einen zuverlässigen, dichten Sitz von Kronen- oder Brückenaufbauten auf pfostenartigen Implantatkörpern gewährleistet.

Diese Aufgabe wird erfindungsgemäss durch die kennzeichnenden Merkmale des Anspruches 1 gelöst.

Durch die Ausstattung der Stirnringflächen von Schraubenkopf und Implantatkörper mit jeweils einer ringförmigen Dichtkante wird ein formschlüssiger, gegenseitiger Eingriff dieser mit einem Kronen- oder Brückenaufbau fest zu verspannenden Stirnringflächen erzielt, indem beim Anziehen der Spannschraube eine zu einer plastischen Verformung der sich an der jeweiligen Dichtkante abstützenden Stirnringfläche des Kronen- oder Brückenaufbaus führende, hohe Flächenpressung erzeugt wird. Dadurch werden die zwischen den gegenseitig miteinander zu verspannenden Stirnringflächen verbleibenden Kanälchen und Hohlräume eingeebnet. Es kommt demgemäss eine auf Zeit absolut dichte Verbindung der gegenseitig zu verspannenden Teile zustande.

Dabei ermöglicht es die Erfindung, Kronen- oder Brückenaufbauten, ohne zusätzliche Dichtmittel einsetzen zu müssen, unmittelbar auf dem Implantatkörper zu befestigen und damit die Gesamtkonstruktion entsprechend zu vereinfachen.

Aus DE-GM 89 05 497.0 ist bereits eine Befestigungsvorrichtung für Zahnimplantate bekannt, die eine auf einen in den Kieferknochen zu implantierenden Implantatkörper aufzuschraubende, hülsenförmige Prothesenverankerungsvorrichtung aufweist. Diese trägt an ihrer unteren, einen Gewindeschaft tragenden Ringstirnfläche einen von dieser konzentrisch abragenden Kragen mit einer sich aussen konisch verjüngenden Umfangsfläche.

In eingeschraubtem Zustand der Verankerungsvorrichtung sitzt diese jedoch mit ihrem Kragen nicht, wie bei der Erfindung, auf einer Innenringschulter des Kronen- oder Brückenaufbaues, sondern auf dem Implantatkörper selbst auf.

Die erfindungsgemäss vorgesehenen, ringförmigen Dichtkanten können durch Andrehen oder auf andere geeignete Weise an das entsprechende Teil angeformt werden.

Eine zu bevorzugende Ausführungsform der Dichtkanten ist Gegenstand der Ansprüche 2 und 3, wobei an der Stirnfläche der Dichtkanten, im Hinblick auf die durch sie zubewerkstelligende, plastische Materialverformung diese begünstigende, zusätzliche Merkmale der Ansprüche 4 und 5 verwirklicht sein können.

Günstig ist ferner, wenn hinsichtlich der gewünschten plastischen Werkstoffverformung bezüglich der miteinander zu verspannenden Teile ein Festigkeitsgefälle gemäss Anspruch 6 gegeben ist.

In weiterer, vorteilhafter Ausgestaltung der Erfindung zum Erhalt einer dauerhaften Abdichtung weist die Spannschraube die Merkmale a) bis e) des Anspruches 7 auf.

Durch eine solche Ausbildung der Spannschraube konnte eine erhebliche Vergrösserung ihres Axialelastizitätspotentials erzielt werden, woraus eine Erhöhung und Aufrechterhaltung der Flankenpressung der sich miteinander in Eingriff befindenden Gewindegänge von Spannschraubengewindeschaft und Implantatkörper-Innengewinde resultiert.

Je nach Bauhöhe des Implantats empfiehlt sich hierbei eine Bemessung der Länge des gewindefreien Schaftteils der Spannschraube sowie des Schraubenkopfdurchmessers entsprechend den Ansprüchen 8 und 9 zu wählen, wobei es günstig ist, ein Schaftgewinde gemäss Anspruch 10 vorzusehen.

Die Materialpaarung zwischen Spannschraube und Brücken- oder Kronenaufbau und/oder Implantatkörper kann dabei ungeschmiert oder geschmiert sein. Im letzteren Falle lässt sich durch Minimierung der zwischen den Gewindeflanken wirksamen Reibung noch eine wesentliche Erhöhung der axialen Verspannkraft erzielen.

Die Spannschraube in der beanspruchten Ausbildung ist gleich vorteilhaft für Implantate mit zu den Implantatkörpern koaxialem oder abgewinkeltem Aufbau einzusetzen.

In der Zeichnung ist ein Ausführungsbeispiel einer erfindungsgemässen Befestigungsvorrichtung dargestellt. Es zeigen:
- Fig. 1:: den teilweise im Längsschnitt gezeigten Implantatkörper der Befestigungsvorrichtung;
- Fig. 2:: die in den Implantatkörper einschraubbare Spannschraube zum gegenseitigen Verspannen von Implantatkörper und Kronen- oder Brückenaufbau, in einer bevorzugten Dimensionierung;
- Fig. 3:: einen in Fig. 2 durch einen strichpunktierten Kreis angedeuteten Ausschnitt, in grösserem Maßstab als Fig. 2;
- Fig. 4 u.5:: jeweils einen Querschnitt durch Varianten der Dichtkante. wobei diese auch für die Dichtkante des Implantatkörpers gelten;
- Fig. 6:: einen Längsschnitt durch eine, eine Zahnkrone haltende Befestigungsvorrichtung in verkürzter Darstellung.

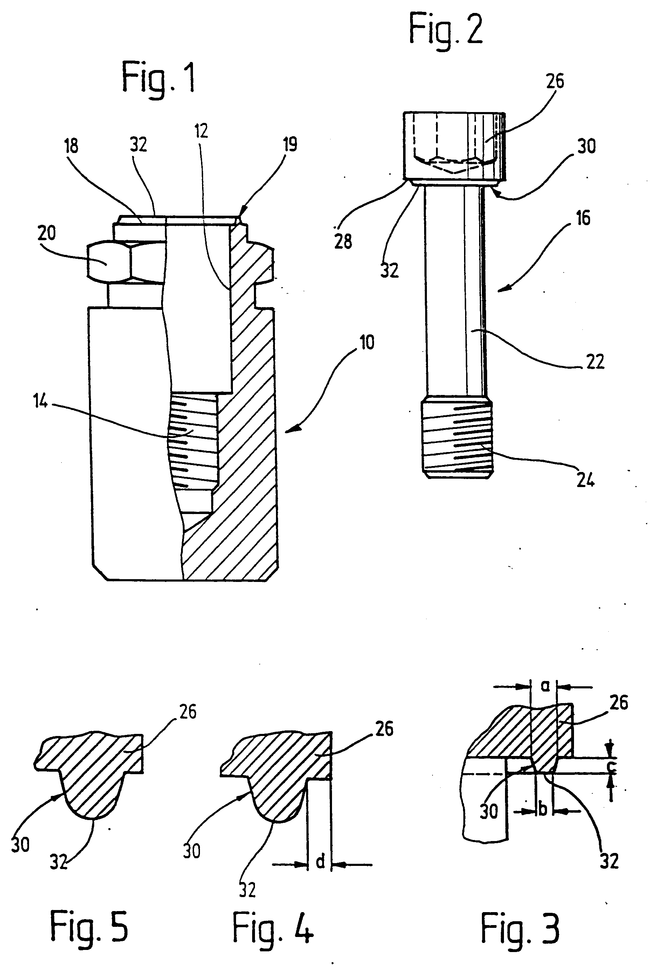

Der in Fig. 1 als Ganzes mit 10 bezeichnete Implantatkörper der Befestigungsvorrichtung 11 ist im Querschnitt kreiszylindrisch ausgebildet und weist ein Axialsackloch 12 mit im Bereich des Sacklochgrundes eingeschnittenem Innengewinde 14 zum Einschrauben der in Fig. 2 gezeigten Spannschraube 16 auf. Mit ihrer Hilfe ist mit der oberen Stirnfläche 18 des Implantatkörpers 10 beispielsweise ein in Fig. 6 dargestellter, üblicher Kronenaufbau verspannbar. An die Stirnringfläche 18 des Implantatkörpers 10 ist konzentrisch eine ringförmige Dichtkante 19 angeformt.

20 bezeichnet einen im Bereich der Stirnfläche 18 umfangsseitig angeformten Sechskant, der zur Rotationssicherung der Implantataufbauten dient.

Der gewindefreie Schaftteil 22 der Spannschraube 16 weist ein Vielfaches der Länge seines vorzugsweise ein M2 aufweisenden Gewindeschaftes 24 auf. Die Höhe des Schraubenkopfes 26 entspricht in etwa dem Durchmesser des Schaftteils 22.

Mit einer an die Stirnringfläche 28 des Schraubenkopfes 26 konzentrisch angeformten, ringförmigen Dichtkante 30 stützt sich dieser beim Verspannen eines Kronen- oder Brückenaufbaus 31 an einer entsprechenden Innenringschulter 33 desselben ab (s. Fig. 6).

Die Dichtkanten 19 und 30 weisen gemäss Fig. 3 einen vorzugsweise trapezförmigen Querschnitt mit folgenden, zu bevorzugenden Abmessungen auf:

| | |
|---|---|
| Basisbreite a: | 0,10 mm, |
| Breite b der flachen Stirnringfläche 32: | 0,04 mm, |
| Dichtkantenhöhe c: | 0,05 mm, |
| Radialabstand d der Dichtkante 30 vom Aussenumfang des Schraubenkopfes 26 bzw. des Implantatkörpers (Fig. 4): | 0,05 mm. |

Hierbei sei bemerkt, dass die Dartellungen der Dichtkanten 19 und 30 gemäss den Fig 3 - 5 nicht den angegebenen, exakten Maßverhältnissen entsprechen.

Während die Stirnringfläche 32 der Dichtkanten 19 und 30 gemäss Fig. 2 und 3 flach ausgebildet ist, kann die unter der Wirkung der beim Anziehen der Spannschraube 16 wirksam werdenden Spannkraft erfolgende Materialverdrängung an der Innenringschulter 33 eines Kronen- oder Brückenaufbaus noch dadurch begünstigt werden, dass die beiden Randzonen der Stirnringflächen 32 der Dichtkanten 19 und 30, wie in Fig. 4 gezeigt, abgerundet sind und die Stirnringflächen 32 selbst schwach konvex ausgebildet oder, wie Fig. 5 zeigt, im Querschnitt zumindest angenähert kreisbogenartig geformt sind.

Die Spannschraube weist bevorzugt folgende Daten auf:

| | |
|---|---|
| Länge des Gewindeschaftes 24: | 1,60 mm, |
| Steigung des Schaftgewindes: | 0,40 mm, |
| Länge des gewindefreien Schaftteils 22: | 5,00 mm, |
| Durchmesser des gewindefreien Schaftteils: | 1,50 mm, |
| Höhe des Schraubenkopfes 26: | 1,50 mm, |
| Aussendurchmesser des Schraubenkopfes 26: | 2,50 mm, |
| Innendurchmesser des Schraubenkopfes: | 2,10 mm, |
| Flankendurchmesser des Gewindes: | 1,74 mm, |
| Kerndurchmesser des Gewindes: | 1,50 mm, |
| Spannungsquerschnitt des gewindefreien Schaftteils 22: | 1,77 mm², |
| Grenzflächenpressung: | 1000 N/mm², |
| Werkstoff der Spannschraube 16: | Ti6 Al 4V, |
| Werkstoffnummer: | 3.7165, |
| Streckgrenze: | 1050 N/mm², |
| Zugfestigkeit: | 1140 N/mm², |
| Elastizitätsmodul: | 106000 N/mm², |
| Bruchdehnung: | 15 %, |
| Brucheinschnürung: | 40 %, |
| Dauerfestigkeit bei 1.000.000 Lastwechseln: | +/- 230 N/mm², |
| Montagemoment der Spannschraube 16: | 30 Ncm. |

Die diese Daten aufweisende Spannschraube 16 zeichnet sich durch entsprechende Biegeweichheit, grosse Axialdehnlänge und demgemäss durch einen Setzverlust aus, der bei Wahl einer durch das angegebene Montagemoment erzeugbaren Zugspannung zum gegenseitigen Verspannen von Implantatkörper 10 und einem Kronen- oder Brückenaufbau 31 vernachlässigbar klein ausfällt und somit auf den angestrebten Festsitz des letzteren einflusslos bleibt.

Wie Fig. 6 zeigt, umfasst der Kronenaufbau 31 einen z.B. aus Keramik hergestellten Zahnkörper 34, der auf eine Gerüsthülse 36 eines Kronengerüstes 38 aufgebracht ist.

Beim Verspannen des Kronenaufbaus 31 mit dem Implantatkörper 10 stützt sich die Gerüsthülse 36 mit einem unteren Aussenflansch 40 zunächst auf der Dichtkante 19 der oberen Stirnringfläche 18 des Implantatkörpers 10 und der Schraubenkopf 26 der Spannschraube 16 mit seiner Dichtkante 30 auf der Innenringschulter 33 der Gerüsthülse 36 ab.

Die hierbei axial wirksamen Spannkräfte bewirken in der Folge, dass sich die Dichtkanten 19, 30 in die jeweilige Stirnringfläche von Aussenflansch 40 bzw. Innenringschulter 33 eingraben, bis sich die einander zugekehrten Stirnringflächen berühren. Dies wird möglich, weil das Kronengerüst 38 vorzugsweise aus Gold besteht und dadurch zwischen diesem und den aus Titan bestehenden Teilen 10, 16 ein entsprechendes Festigkeitsgefälle vorhanden ist.

Die Dichtkanten 19, 30 gewährleisten hierbei eine einwandfreie Radialabdichtung gegenüber dem Axialsackloch 12 des Implantatkörpers 10.

Die Gerüsthülse 36 ist zusätzlich noch durch eine Kunststoff-Füllung 42 verschlossen, wobei zwischen diese und dem Schraubenkopf 26 der Spannschraube 16 ein Pellet 44 aus Schaumstoff eingebracht ist, um das Innenmehrkant des Schraubenkopfes 26 von Kunststoff freizuhalten, so dass sich der Kronenaufbau 31 jederzeit vom Implantatkörper 10 abnehmen lässt.

## Patentansprüche

1. Befestigungsvorrichtung für Zahnimplantate, mit einem pfostenartigen Implantatkörper (10), der in eine vorgefertigte Kieferknochenbohrung einsetzbar ist und ein axiales Sacklochgewinde (14) zum Einbringen einer Spannschraube (16) zur Aufnahme eines Kronen- oder Brückenaufbaus (31) und zum Festspannen desselben auf dem Implantatkörper (10) aufweist, an dessen dem Kronen- oder Brückenaufbau (31) zugekehrter Stirnringfläche (18) eine ringförmige Dichtkante (19) konzentrisch angeformt ist, wobei der Implantatkörper (10) und zumindest die Spannschraube (16) aus Titan bestehen und die Spannschraube (16) zwischen ihrem Gewindeschaft (24) und einem sich an einer Innenringschulter des Kronen- oder Brückenaufbaus (31) abstützenden Schraubenkopf (26) einen im Durchmesser geringer als der Gewindeschaft (24) bemessenen Schaftteil (22) aufweist,
dadurch gekennzeichnet,
dass an die Stirnringfläche (28) des Schraubenkopfes (26) der Spannschraube (16) eine ringförmige Dichtkante (30) konzentrisch angeformt ist und dass sich die ringförmigen Dichtkanten (19; 30) im montierten Zustand jeweils unmittelbar an dem Gerüst (38) des Kronen- oder Brückenaufbaus (31) abstützen.

2. Befestigungsvorrichtung nach Anspruch 1, gekennzeichnet durch einen trapezförmigen Querschnitt der Dichtkanten (19, 30).

3. Befestigungsvorrichtung nach Anspruch 2, gekennzeichnet durch folgende Abmessungen der trapezförmigen Dichtkanten (19, 30), im Querschnitt gesehen:
| | |
|---|---|
| Basisbreite a: | 0,10 mm, |
| Breite der flachen Stirnringfläche b: | 0,04 mm, |
| Dichtkantenhöhe c: | 0,05 mm, |
| Radialabstand d der Dichtkanten (19 bzw. 30) vom Aussenumfang des sie tragenden Teils (10 bzw. 16) | 0,05 mm. |

4. Befestigungsvorrichtung nach Anspruch 3, gekennzeichnet durch abgerundete Aussen- und Innenringkanten der Stirnringfläche (32) der Dichtkanten (19, 30).

5. Befestigungsvorrichtung nach Anspruch 3 oder 4, gekennzeichnet durch eine im Querschnitt konvex gekrümmte Stirnringfläche (32) der Dichtkanten (19, 30).

6. Befestigungsvorrichtung nach einem der vorhergehenden Ansprüche, gekennzeichnet durch grössere Materialfestigkeit des die Dichtkanten (19, 30) tragenden Teils (10 bzw. 16) gegenüber der Festigkeit des mit diesem zu verspannenden Teils (Kronenaufbau 31).

7. Befestigungsvorrichtung nach einem der vorhergehenden Ansprüche, gekennzeichnet durch folgende Merkmale:
a) Die Länge des Gewindeschaftes (24) der Spannschraube (16) beträgt zwischen 1,00 mm und 2,00 mm, vorzugsweise 1,60 mm.
b) Die Steigung des Schaftgewindes beträgt zwischen 0,2 mm und 0,6 mm, vorzugsweise 0,4 mm.
c) Der gewindefreie Schaftteil (22) weist einen Durchmesser zwischen 1,00 mm und 2,00 mm, vorzugsweise 1,50 mm auf.
d) Die Länge des gewindefreien Schaftteils (22) ist grösser als die Maximallänge des Gewindeschaftes (24).
e) Die Höhe des Schraubenkopfes (26) beträgt zwischen 1,00 mm und 3,00 mm, vorzugsweise 1,5 mm.

8. Befestigungsvorrichtung nach einem der vorhergehenden Ansprüche, gekennzeichnet durch eine Länge des gewindefreien Schaftteils (22) zwischen 3,50 mm und 14,00 mm, vorzugsweise 5,00 mm.

9. Befestigungsvorrichtung nach einem der vorhergehenden Ansprüche, gekennzeichnet durch einen Schraubenkopfdurchmesser zwischen 2,00 mm und 3,00 mm, vorzugsweise 2,50 mm.

10. Befestigungsvorrichtung nach einem der vorhergehenden Ansprüche, gekennzeichnet durch ein M2-Gewinde (24).

## Claims

1. A securing device for tooth implants, having a postlike implant body (10) which can be inserted into a hole previously made in the jawbone and has an axial blind bore thread (14) for the introduction of a tightening screw 16 for receiving a crown or bridge structure (31) and tightening it on the implant body (10), onto whose annular end face (18), oriented toward the crown or bridge structure (31), an annular sealing edge (19) is concentrically formed, wherein the implant body (10) and at least the tightening screw (16) comprise titanium and the tightening screw (16), between its threaded shaft (24) and a screw head (25) supported on an inner annular shoulder of the crown or bridge structure (31), has a shaft portion (22) of lesser diameter than the threaded shaft (24),
characterized in that
an annular sealing edge (30) is concentrically formed onto the annular end face (28) of the screw head (26) of the tightening screw (16), and that the annular sealing edges (19; 30), in the installed state, are each supported directly on the core (38) of the crown or bridge structure (31).

2. The securing device of claim 1, characterized by a trapezoidal cross section of the sealing edges (19, 30).

3. The securing device of claim 2, characterized by the following dimensions of the trapezoidal sealing edges (19, 30), in cross section:
| | |
|---|---|
| width of base (a): | 0.10 mm |
| width (b) of the flat annular end face: | 0.04 mm |
| sealing edge height (c:) | 0.05 mm |
| radial spacing (d) of the sealing edges (19) and (30) from the outer circumference of the part (10 and 16, respectively) supporting them: | 0.05 mm. |

4. The securing device of claim 3, characterized by rounded outer and inner annular edges of the annular end face (32) of the sealing edges (19, 30).

5. The securing device of claim 3 or 4, characterized by an annular end face (32) of the sealing edges (19, 30) which is convexly curved in cross section.

6. The securing device of one of the foregoing claims, characterized by greater material strength of the parts (10) and (16) supporting the sealing edges (19 and 30, respectively), compared with the strength of the part (crown construction 31) to be braced with it.

7. The securing device of one of the foregoing claims, characterized by the following characteristics:
a) the length of the threaded shaft (24) of the tightening screw (16) is between 1.00 mm and 2.00 mm, preferably 1.60 mm;
b) the pitch of the shaft thread is between 0.2 mm and 0.6 mm, preferably 0.4 mm;
c) the unthreaded shaft portion (22) has a diameter between 1.00 mm and 2.00 mm, preferably 1.50 mm;
d) the length of the unthreaded shaft portion (22) is greater than the maximum length of the threaded shaft (24);
e) the height of the screw head (26) is between 1.00 mm and 3.00 mm, preferably 1.5 mm.

8. The securing device of one of the foregoing claims, characterized by a length of the unthreaded shaft portion (22) of between 3.50 mm and 14.00 mm, preferably 5.00 mm.

9. The securing device of one of the foregoing claims, characterized by a screw head diameter between 2.00 mm and 3.00 mm, preferably 2.50 mm.

10. The securing device of one of the foregoing claims, characterized by an M2 thread (24).

## Revendications

1. Dispositif pour fixer des implants dentaires comprenant un corps d'implant (10) de type montant, qui peut être placé dans un forage préformé dans un os de mâchoire et qui présente un trou borgne taraudé axial pour mettre en place une vis de serrage (16), reçevoir une structure (31) de couronne ou de bridge et pour fixer celle-ci sur le corps d'implant (10), ayant, sur sa surface annulaire frontale (18) tournée vers la structure (31) de couronne ou de bridge, une arête d' étanchéité annulaire conformée concentriquement (19), le corps d'implant dentaire (10) et au moins la vis de serrage (16) étant formés de titane, la vis de serrage (16) présentant, entre sa tige filetée (24) et une tête de vis (26) s'appuyent sur un épaulement circulaire intérieur de la structure (31) de couronne ou du bridge, une portion de tige (22) de diamètre inférieur à celui de la tige filetée (24),
**caractérisé en ce que**
une arête d'étanchéité annulaire (30) est formée concentriquement sur la surface annulaire frontale (28) de la tête (26) de la vis de serrage (16) et en ce que les arêtes d'étanchéité annulaires (19; 30) s'appuyent, à l'état monté, à chaque fois directement contre le châssis (38) de la couronne ou du bridge (31).

2. Dispositif de fixation selon la revendication 1, caractérisé par une section des arêtes d'étanchéité (19, 30) de forme trapézoïdale.

3. Dispositif de fixation selon la revendication 2, caractérisé par le fait que les arêtes d'étanchéité de forme trapézoïdale présentent, dansl leur section, les dimensions suivantes:
| | |
|---|---|
| largeur de la base a: | 0,10 mm |
| largeur de la surface frontale annulaire b: | 0,04 mm |
| hauteur de l'arête d'étanchéité c: | 0,05 mm |
| écartement, dans le sens radial, des arêtes d'étanchéité (19 ou 30) de la circonférence extérieure de la pièce qui les porte (10 ou 16) : | 0,05 mm. |

4. Dispositif de fixation selon la revendication 3, caractérisé par des bords annulaires extérieurs et intérieurs arrondis des surfaces frontales annulaires (32) des arêtes d'étanchéité (19, 30).

5. Dispositif de fixation selon la revendication 3 ou 4, caractérisé par une surface annulaire frontale (32) des arêtes d'étanchéité (19, 30) courbe convexe en section.

6. Dispositif de fixation selon l'une des revendications précédentes, caractérisé en ce que la pièce (10 ou 16) portant les arêtes d'étanchéité (19, 30) est faite d'un matériau plus solide que celui de la pièce (structure (31) de couronne) qui doit y être fixée.

7. Dispositif de fixation selon l'une des revendications précédentes avec les caractéristiques suivantes:
a) La longueur de la tige filetée (24) de la vis de serrage (16) est comprise entre 1,00 mm et 2,00 mm, et vaut de préférence 1,60 mm.
b) Le pas du filetage de tige est compris entre 0,2 mm et 0,6 mm, et vaut de préférence 0,4 mm.
c) La portion de tige (22) non-filetée a un diamètre compris entre 1,00 mm et 2,00 mm, de préférence de 1,50 mm.
d) La longueur de la portion de tige (22) sans filetage est plus grande que la longueur maximale de la tige filetée (24).
e) La hauteur de la tête de vis (26) est comprise entre 1,00 mm et 3,00 mm, et vaut de préférence 1,5 mm.

8. Dispositif de fixation selon l'une des revendications précédentes, caractérisé par une longueur de la portion de tige (22) non-filetée comprise entre 3,50 mm et 14,00, de préférence de 5,00 mm.

9. Dispositif de fixation selon l'une des revendications précédentes, caractérisé par un diamètre de tête de vis compris entre 2,00 mm et 3,00 mm, de préférence de 2,50 mm.

10. Dispositif de fixation selon l'une quelconque des revendications précédentes, caractérisé par un filetage de type M2 (24).
